(19) Europäisches Patentamt
European Patent Office
Office européen des brevets

(11) **EP 4 327 948 A1**

(12) **EUROPEAN PATENT APPLICATION**

(43) Date of publication:
**28.02.2024   Bulletin 2024/09**

(21) Application number: **22191526.7**

(22) Date of filing: **22.08.2022**

(51) International Patent Classification (IPC):
**B04B 1/20** *(2006.01)*        **B04B 13/00** *(2006.01)*

(52) Cooperative Patent Classification (CPC):
**B04B 1/20; B04B 13/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GEA Westfalia Separator Group GmbH
59302 Oelde (DE)**

(72) Inventors:
• **FLACH, Andree
  30171 Hannoverd (DE)**
• **LICHA, Holgerr
  06526 Sangerhausen (DE)**
• **DEIGHTON, Jake
  2440 Geel (BE)**
• **VEYNSHTER, Anton
  32805 Horn-Bad Meinberg (DE)**

(74) Representative: **Bardehle Pagenberg
Partnerschaft mbB
Patentanwälte Rechtsanwälte
Prinzregentenplatz 7
81675 München (DE)**

(54) **AI CONTROLLED DECANTER**

(57)    The present invention, *inter alia*, relates to a computer-implemented method for optimizing the output of a decanter during operation using a reinforcement artificial intelligence, AI, engine, the method comprises a. operating the decanter according to a plurality of operation parameters; b. processing, by the decanter, a physical input comprising a sludge and a polymer, and producing a physical output comprising a centrate and cake; c. determining a plurality of substance parameters based on the physical output; d. passing, to the reinforcement AI engine, the plurality of substance parameters and the plurality of operation parameters; e. determining, by the reinforcement AI engine, a quality value for each of the plurality of substance parameters; f. predicting, by the reinforcement AI engine, a plurality of adjusted operation parameters; and g. further operating the decanter based on the plurality of adjusted operation parameters.

Fig. 4B

**Description**

**1. Technical Field**

The present invention relates to a computer-implemented method for optimizing the output of a decanter centrifuge, a related computer-implemented method for training a reinforcement/supervised learning artificial intelligence (AI) engine, a related trained reinforcement AI engine, an apparatus and a computer program.

**2. Prior art**

Decanter centrifuges (also referred to herein as decanter) are widely used in the field of liquid processing, in particular water processing such as, e.g., wastewater reprocessing. Decanters are used to separate different phases and/or sediments comprised in a fluid (e.g., a liquid substance such as a sludge) from each other. For that purpose, the fluid may be filled into a rotating volume of a decanter wherein the different phases/sediments may be separated from each other by means of centrifugal forces acting on the different phases/sediments in the fluid differently, e.g., due to the different masses of the phases/sediments in the fluid. Therefore, phases/sediments with a higher mass as compared to phases/sediments with a lower mass, may be superseded towards a radially outer region of the rotating volume of the decanter whereas phases/sediments with a lower mass may remain in a radial region closer to the center axis of the decanter about which the rotation of the decanter is performed.

When operating a decanter in the field of wastewater processing, it is envisaged that a purified output fluid (e.g., clean water, also referred to as centrate) is obtained by separating suspended sediments from water comprised in a sludge and transporting the separated sediments away from the rotating decanter volume. The separated phases/sediments are often referred to as cake which may be disposed as waste. Since the disposal is typically cost-intensive and the expenses are oftentimes proportional to the weight of the cake, it is preferred to keep the mass of cake to be disposed low such that disposal costs may be minimized. Moreover, the higher the weight of the cake, the more complicated is its transportation because more powerful transportation equipment is required. Hence, the lighter the weight of the cake (depending on the included moisture), the easier the transportation. Hence, the reduction of the mass and/or weight of the cake is desired. This may at least in part be achieved by minimizing the amount of liquid, i.e., the moisture content in the cake, which may, e.g., be achieved by setting respective operation parameters of the decanter accordingly (e.g., a speed of a decanter bowl).

Said adjustment is commonly carried out manually by an operator of the decanter (and/or by means of a (manually set) PID controller). To do so, the operator typically needs to collect samples of cake repeatedly to determine its moisture content and may then have to determine, based on the moisture content, which operation parameters should be used next to, e.g., further decrease the moisture content of the cake. However, such a manual procedure of optimizing the moisture content of the cake may be cost-intensive due to the required labor work and may lead to unsatisfactory results. The latter may lead to still higher moisture in the cake as anticipated and may thus lead to an undue weight and/or mass of the cake. Therefore, a time-consuming iterative optimization conducted by an operator procedure is required.

What is more, if a decanter is initially started, it may take a certain amount of time (e.g., approx. 30 min or more) until a favored range for the optimal operation parameters is found and reached. This means that during this initial start-up time, the decanter is not operated at ideal operation conditions, potentially leading to a cake with an undesired moisture content thus unduly increasing associated disposal costs.

If more than one parameter is to be optimized (e.g., a cake dryness and a purity of the water), the situation becomes even more complicated. More specifically, under some circumstances, it may be desirable to not only minimize the moisture of the cake. In some cases, it may additionally be seen advantageous to also optimize, e.g., the quality (e.g., the purity of the water being purified in the decanter; also referred to as centrate quality). These two aspects may lead to an interplay between the moisture of the cake and the centrate quality such that more than one operation parameter of the decanter needs to be adjusted to ensure that a desired optimized output of the decanter is obtained. This even further complicates the manual optimization procedure with respect to time efforts and effectiveness.

The prior art only partially addresses these problems by suggesting the usage of artificial intelligence-based tools to determine the optimum operation parameters of a decanter and to optimize the decanter output.

As an example, WO 2019/150002 A1 relates to a method for providing at least one input parameter of a sludge dewatering process of a wastewater treatment plant. The method comprises: obtaining data representing process and/or plant configuration data of said wastewater treatment plant; feeding at least part of the obtained data to at least one model formed at least by historical process and plant configuration data gathered from a plurality of wastewater treatment plants combined with properties of applied chemicals in said wastewater treatment plants; and predicting at least one input parameter and/or at least one output parameter of the sludge dewatering process by means of the at least one model for adjusting sludge dewatering process of said wastewater treatment plant.

JP 2021/102195 relates to a machine learning device for a centrifugal separation system including: a learning data set storage unit which stores a plurality of learning data sets comprised of input data including a slurry concentration of a processing object liquid, a moisture content of a dehydrated solid, a concentration of a separated liquid and a torque value of a screw conveyor, and output data including control parameter of the centrifugal separation system, the control parameter being associated with the input data; a learning unit which receives, as input, the plurality of learning data sets, and consequently learns a learning model that infers correlation relationship between the input data and the output data; and a learned model storage unit which stores the learning model learned by the learning unit. The control parameter is comprised of at least one of a supply amount of an additive which is added to the processing object liquid, a centrifugal force of a bowl, and a differential velocity controlled by a differential velocity generation device.

JP 6994330 B2 relates to a dewatering system which includes: a dewatering device for producing a suspended residue by removing liquid from a suspension; and an analyzer for storing a pre-built calculation model based on suspension data indicating a status of suspension, operating data including multiple operating parameters of the dewatering device, and suspended residue data indicating a status of the suspended residue. The analyzer calculates a status predicted value of the suspended residue by entering a current value of the suspension data and current values of the operating parameters into the calculation model.

The AI-based approaches known in the art are not capable of providing the desired effectiveness for operating a decanter, i.e., the output of the decanter is not sufficiently optimized in a satisfying manner. Moreover, these AI-based approaches also suffer from flexibility as it may not easily be possible to further train a respective AI model during operation. Hence, approaches are required that provide improved optimization results and that ca be (further) optimized during operation. However, there is also a need to provide methods that achieve adequate optimization results by at the same time requiring less input data such that complexity of the whole process is reduced.

## 3. Summary of the invention

These drawbacks are at least partially solved by an aspect of the present invention, namely a computer-implemented method for optimizing the output of a decanter during operation which may use a reinforcement artificial intelligence, AI, engine. The method may comprise a. operating the decanter according to a plurality of operation parameters and may comprise b. processing, by the decanter, a physical input which may comprise a sludge and a polymer, and may comprise producing a physical output comprising a centrate and cake. The method may further comprise c. determining a plurality of substance parameters based on the physical output and may comprise d. passing, to the reinforcement AI engine, the plurality of substance parameters and the plurality of operation parameters. The method may further comprise e. determining, by the reinforcement AI engine, a quality value for each of the plurality of substance parameters and may comprise f. predicting, by the reinforcement AI engine, a plurality of adjusted operation parameters. Furthermore, the method may comprise g. further operating the decanter based on the plurality of adjusted operation parameters.

The physical output may be understood as substances originally contained in the physical input which were separated from each other due to the operation of the decanter. A quality value may be understood as a numerical value indicating whether a respective substance parameter is within a predetermined acceptable parameter range. An adjusted operation parameter may relate to an operation parameter which is determined after it has been determined that a preceding operation parameter has not led to an optimization of one or more parameters of the plurality of substance parameters.

By operating the decanter based at least in part on the aforementioned computer-implemented method, an autonomous operation of a decanter may be facilitated as no or at least a minimum input provided by a human operator may be required to operate the decanter. The reinforcement-based AI control of the decanter is particularly suitable to improve the AI-based control of a decanter and may allow that the decanter is faster set to the optimum operation conditions (as no "trial-and-error" approach is required by an operator to find optimum operation parameters for the decanter). This may at least contribute to a decrease or even a minimization of disposal costs of the physical output of a decanter. The autonomous operation of the decanter may further prevent an undue resource consumption as a result of a potential inattention of an operator (e.g., if the operator does not quickly recognize that a certain decanter is not operated at its optimized settings).

The plurality of operation parameters and the plurality of adjusted operation parameters may comprise one or more of a differential speed of a scroll of the decanter, a speed of a decanter bowl, a feed flow of the sludge; and/or a feed flow of the polymer.

The speed of the decanter bowl may be understood as a rotational frequency (rpm) of an inner (processing) volume of the decanter in which the actual separation of different phases (e.g., liquid and solid) and/or sediments may be performed. A high rotational frequency may cause higher centrifugal forces acting on different phases/sediments contained in the inner volume as compared to a low rotation frequency which may lead to respective lower centrifugal forces (and a less pronounced separation between different phases/sediments). Heavier phases/sediments may thus accumulate at a radially outer portion of the inner volume of the decanter bowl and may even leave the inner volume of the decanter bowl.

The decanter bowl may at least partially be surrounded by a scroll, wherein the scroll is adapted to discharge separated phases/sediments which may have left the decanter bowl such that respective separated sediments may be disposed from the decanter.

A differential speed of the scroll of the decanter may be understood as an absolute relative speed of the scroll of the decanter (e.g., in revolutions per minute (RPM)) and the bowl of the decanter (e.g., in RPM). A high differential speed of the scroll may be associated with a shorter retention time (e.g., a period of time phases/sediments to be separated from each other may remain within the bowl) of separated phases/sediments in the bowl as compared to a smaller differential speed at which the phases/sediments to be separated may possess a higher retention time within the bowl.

A sludge may be understood as the processing fluid injected into the decanter bowl. The sludge may comprise a liquid (preferably water) and one or more different sediments which are to be separated from the liquid by means of the decanter. In some cases, the sludge may be wastewater.

A feed flow of the polymer may be understood as a rate (e.g., in [kg/s] or [l/s]) at which the polymer may be added to the sludge. The polymer may be adapted such that it supports a coagulation of sediment particles to larger and heavier compounds such that an improved separation of the formed compound from other sediments and/or the liquid is facilitated.

This may advantageously contribute to an optimization of the substance parameters which may be facilitated by adjusting the operation parameters such that the substance parameters converge towards a preferred parameter range (e.g., a predefined parameter range about certain substance parameters which are considered as optimized).

The determining of the plurality of substance parameters may further comprise: determining, by one or more sensors a dryness of the cake, a purity of the centrate, and/or a dosing of the polymer in the centrate.

A dryness of the cake may be understood as a measure of the liquid content of the cake. In other words, the dryness of the cake may implicitly relate to the moisture content of a cake. A high cake dryness may refer to a cake with a low moisture content as compared to a low cake dryness with a respective high moisture content.

A purity of the centrate may be understood as a cleanliness of a processed fluid (e.g., water).

A dosing of the polymer may refer to the amount of polymers added to the sludge.

The determining of the plurality of substance parameters allows an optimization of one or more parameters of the plurality of substance parameters based at least in part on the reinforcement AI engine. This may facilitate a closed-loop operation of the decanter by determining the plurality of operation parameters such that the aforementioned plurality of substance parameters may be optimized.

The determining, by the reinforcement AI engine, of a quality value for each of the plurality of substance parameters may further comprise setting a low cake dryness quality value, if the cake dryness is in the range of 10-19,99% dry substance (%DS), or setting a high cake dryness quality value, if the cake dryness is in the range of 20-35%DS and may comprise setting a low centrate purity quality value, if the purity of the centrate is in the range of 300-1000 Nephelometric Turbidity Unit (NTU), or setting a high centrate purity quality value, if the purity of the centrate is in the range of 50-299,99 NTU and may comprise setting a high polymer dosing quality value, if the polymer dosing in the centrate is in the range of 2-9,99 kg/tDS (kg/tons of dry substance), or setting a low polymer dosing quality value, if the polymer dosing in the centrate is in the range of 10-20 kg/tDS.

A high cake dryness quality value may indicate that the cake dryness is acceptable or that the cake dryness may be at least slightly decreased. A low cake dryness quality value may indicate that the cake dryness is not sufficient and thus may need to be increased. The cake dryness quality value is considered low if the cake dryness is preferably within 10-19,99%DS, more preferably within 12-18%DS and most preferably between 14-16%DS, whereas the cake dryness quality value is considered high if the cake dryness is within 20-35%DS, more preferably between 25-30%DS and most preferably between 26-28%DS.

A high centrate purity quality value may indicate that the centrate purity is acceptable or may be at least slightly decreased. A low centrate purity quality value may indicate that the centrate purity needs to be increased. A low centrate purity may be understood as a centrate with a higher turbidity/more sediments as compared to a high centrate purity. The centrate purity quality value may be considered high if the centrate purity is preferably within 50-299,99 NTU, more preferably between 100-250 NTU and most preferably between 150-200 NTU, whereas the centrate purity quality value may be considered low if the centrate purity is preferably within 300-1000 NTU, more preferably within 500-800 NTU and most preferably within 600-700 NTU.

A high polymer dosing quality value may indicate that the polymer dosing is acceptable or that the polymer dosing may be slightly decreased. A low polymer dosing may be understood as providing less polymers to the sludge in the decanter centrifuge as compared to a scenario with a high polymer dosing. The polymer dosing quality value may be considered high if the polymer dosing is preferably within 2-9,99 kg/tDS, more preferably within 4-8 kg/tDS and most preferably between 6-7 kg/tDS, whereas the polymer dosing quality value may be considered low if the polymer dosing is preferably within 10-20 kg/tDS, more preferably within 12-18 kg/tDS and most preferably within 14-16 kg/tDS.

By providing respective quality values for the cake dryness, the centrate purity and the polymer dosing, a quantitative estimation of the extent of optimization of the substance parameters associated with the output of a decanter may be facilitated. Moreover, a quantitative measure may be supplied to the reinforcement AI engine based on which an adaption of the prediction of the plurality of operation parameters may be performed such that a subsequently obtained plurality of substance parameters converges towards respective optimized values.

The predicting, by the reinforcement AI engine, of a plurality of adjusted operation parameters may further comprise determining, based on the plurality of operation parameters, a total energy consumption of the decanter and may comprise determining an optimized value for each of the differential speed of the scroll of the decanter, the speed of the decanter bowl, the feed flow of the sludge, and the feed flow of the polymer by considering a balance between the dryness of the cake, the purity of the centrate, the total energy consumption of the decanter and the dosing of the polymer in the centrate.

A balance of the dryness of the cake, the purity of the centrate, the total energy consumption and the dosing of the polymer may be understood as an interdependence of these parameters. In other words, as an example, a change of the dryness of the cake may inevitably also change the purity of the centrate and the total energy consumption of the decanter as well as the polymer dosing.

The predicting of a plurality of adjusted operation parameters may further contribute to a convergence of the one or more substance parameters towards optimum settings for the one or more substance parameters.

The determining of an optimized value may further comprise, if the cake dryness quality value is high, decreasing the optimized value for the feed flow of the polymer, decreasing at least one of the optimized values for the differential speed of the scroll of the decanter and the speed of the decanter bowl, and/or increasing the optimized value for the feed flow of the sludge. The determining may further comprise, if the cake dryness quality value is low, increasing the optimized value for the feed flow of the polymer, increasing at least one of the optimized values for the differential speed of the scroll of the decanter and the speed of the decanter bowl, and/or decreasing the optimized value for the feed flow of the sludge.

If the cake dryness quality value is essentially high, at least two of the aforementioned operation parameters of the decanter centrifuge may be adapted such that the cake dryness may be decreased.

A decrease of the feed flow of the polymer may lead to less coagulation of the sludge injected into the decanter bowl. As a result, the coagulation of sludge particles may be reduced such that sediments in the sludge have a lighter weight (as it would be the case if the original polymer feel flow is regarded). This may lead to a decrease of the extent of separation of the phases/sediments comprised in the sludge. As a result, the cake dryness may be reduced, and the cake may contain a higher moisture content as compared to an exemplary situation in which the feed flow of the polymer is higher.

A decrease of the optimized value for the differential speed may lead to a longer retention time of the phases/sediments to be separated. Due to the longer retention time, the time during which a separation of phases/sediments may occur is prolonged. This may lead to an increased cake dryness and may comply with a high cake dryness quality value.

The decrease of the speed of the decanter bowl may also decrease the differential speed of the decanter.

An increase of the feed flow of the sludge may decrease the time span during which the sludge passes the decanter bowl. As a result, the time span, during which centrifugal forces may act on the sediments in the sludge, may be decreased. This may lead to a less efficient separation of phases/sediments from each other. As a result, the cake may contain a higher moisture content as it would be obtained if the feed flow of the sludge was higher.

The aforementioned adjustments of the at least two operation parameters of the decanter centrifuge may also, vice versa, be applicable in an inverted manner to increase the cake dryness.

By means of the aforementioned adjustments of at least two operation parameters of the decanter bowl, an optimization of the substance parameters towards a desired optimization may be facilitated.

The determining of an optimized value may further comprise, if the centrate purity quality value is high, decreasing at least one of the optimized values for the differential speed of the scroll of the decanter and the speed of the decanter bowl, and/or increasing the optimized value for the feed flow of the sludge. The determining may further comprise, if the centrate purity quality value is low, increasing at least one of the optimized values for the differential speed of the scroll of the decanter and the speed of the decanter bowl, and/or decreasing the optimized value for the feed flow of the sludge.

As outlined above, a decrease of the differential speed of the decanter may increase the retention time of phases/sediments separated from the liquid of the sludge. Therefore, the extent to which sediments are separated from the liquid may be increased, which may lead to an increased purity of the centrate.

A decrease of the optimized value for the differential speed may lead to a longer retention time of the phases/sediments to be separated. Due to the longer retention time, the time during which a separation of phases/sediments may occur is prolonged, which may lead to an increased centrate purity.

An increase of the feed flow of the sludge may decrease the time span during which the sludge passes the decanter bowl. As a result, the time span, during which centrifugal forces may act on the sediments in the sludge, may be decreased. This may lead to a reduced centrate purity.

By means of the aforementioned adjustments of one or more operation parameters of the decanter centrifuge, a convergence of the one or more substance parameters towards respective optimized values may further be supported.

The aforementioned adjustments of the at least two operation parameters may also, vice versa, be applicable to invert the centrate purity quality, respectively.

The determining of an optimized value may further comprise, if the polymer dosing quality value is high, the optimized value for the feed flow of the polymer may be increased, and/or at least one of the optimized values for the differential speed of the scroll of the decanter and the speed of the decanter bowl may be increased, and/or the optimized value for the feed flow of the sludge may be decreased. If the polymer dosing quality value is low, the optimized value for the feed flow of the polymer may be decreased, and/or at least one of the optimized values for the differential speed of the scroll of the decanter and the speed of the decanter bowl may be decreased, and/or the optimized value for the optimized value for the feed flow of the sludge may be increased.

By means of the aforementioned adjustments of one or more operation parameters of the decanter centrifuge, a convergence of the one or more substance parameters towards respective optimized values may advantageously be supported.

The predicting, by the reinforcement AI engine, of a plurality of adjusted operation parameters may further comprise deriving the plurality of adjusted operation parameters based on the optimized value for each of the differential speed of the scroll of the decanter, the speed of the decanter bowl, the feed flow of the sludge, and the feed flow of the polymer.

In some cases, an adjustment of a certain operation parameter may affect two or more of the substance parameters due to their possible interrelation.

In some scenarios, the plurality of operation parameters may be derived based on two or three or all four of the aforementioned optimized values for each of the differential speed of the scroll of the decanter, the speed of the decanter bowl, the feed flow of the sludge, and the feed flow of the polymer.

The predicting may be based at least in part on the assigned quality values for the one or more parameters of the plurality of substance parameters.

By deriving the plurality of adjusted operation parameters on one or more of the operation parameters, the interrelation of the substance parameters may be considered and an improved optimization of the substance parameters may be obtained (e.g., the substance parameters may be optimized such that ideally all of them converge towards a desired optimum value and may thus not be limited to individual substance parameters only).

The computer-implemented method may further comprise adjusting, by an agent, the reinforcement AI engine based on the plurality of substance parameters and the plurality of operation parameters.

The agent may be adapted to determine, based at least in part on the one or more quality values, whether a certain operation parameter of the one or more operation parameters of the decanter is to be increased or decreased to ensure that the decanter is operated such that a desired optimum value of the one or more substance parameters is reached.

The agent may be configured to adjust the reinforcement AI engine such that a sum over the assigned quality values is maximized.

Using an agent to adjust the reinforcement AI engine may allow a training of the AI engine during operation of the decanter. Therefore, the prediction of the one or more operation parameters of the decanter may continuously be further improved during operation of the decanter. In other words, it may be facilitated that the AI engine is further trained during operation of the decanter and may thus be adapted to real world operation conditions of the decanter and, e.g., limited to simulation-based training of the decanter only. This may at least contribute to a precise operation of the decanter at it optimized plurality of operation parameters.

The computer-implemented method may further comprise performing the steps b. to g., as outlined above, more than once.

The steps b. to g. may be performed continuously, repeatedly and autonomously in a closed-loop. Alternatively, it may be possible that the steps b. to g. are repeated once a minute, once an hour, once a day, etc. Additionally or alternatively, it may be possible that the steps b. to g. are only performed upon a user input.

By performing said steps more than once, a closed-loop operation of the decanter may be facilitated and it may be ensured that the decanter is steadily operated at its optimized plurality of operation parameters such that an optimized output of the decanter is ensured.

Another aspect of the present invention relates to a computer-implemented method for training a reinforcement artificial intelligence, AI, engine which may be usable for operating a decanter centrifuge. The method may comprise the step of a. simulating the operation of a decanter centrifuge to generate a plurality of operation parameters and may comprise b. determining a plurality of substance parameters of the simulated decanter centrifuge. Moreover, the method may comprise c. passing the plurality of operation parameters and the plurality of substance parameters to the reinforcement AI engine and may comprise d. adjusting, by an agent, the reinforcement AI engine based on the plurality of substance parameters and the plurality of operation parameters.

The plurality of operation parameters obtained from the simulation may be identical to the operation parameters described above with reference to the computer-implemented method for operating a decanter. The plurality of operation parameters obtained from the simulation may be understood as training data for the reinforcement AI engine.

The plurality of substance parameters determined from the simulated decanter may be identical to the substance parameters described above with reference to the computer-implemented method for operating a decanter. The plurality of substance parameters obtained from the simulation may be used as training data for the reinforcement AI engine.

In some cases, only simulated data may be passed to the reinforcement AI engine for the purpose of training the reinforcement AI engine. However, in some cases, data (e.g., a plurality of operation parameters) obtained from one or more a physically operated decanter centrifuges may additionally or alternatively be passed to the reinforcement AI engine for the purpose of training.

By means of the computer-implemented method for training a reinforcement AI engine, an improved operation of a decanter centrifuge by means of, e.g., a computer-implemented method may be facilitated. This may be facilitated based at least in part on simulated data pairs of a plurality of operation parameters and a plurality of substance parameters (being in relation to the operation parameters). Due to the possibility of obtaining training data from the simulation, it may generally be facilitated to provide the reinforcement AI engine with a larger training data set and in a more cost-efficient manner as it would be possible with training data obtained from a physically operated decanter centrifuge. This may allow a more precise and faster training of the reinforcement AI engine and based thereon a more precise and reliable prediction by the reinforcement AI engine of a plurality of operation parameters when using the trained reinforcement AI engine for the operation of a decanter centrifuge. This may support a close operation of the decanter centrifuge at the desired optimized operation parameters.

Another aspect of the invention relates to a reinforcement artificial intelligence, AI, engine which may be trained according to the aforementioned computer-implemented method for training a reinforcement AI engine. The reinforcement AI engine may be usable in a method as mentioned above.

The reinforcement AI engine may be located at one or more decanter centrifuges (e.g., in respective processing units). Additionally or alternatively, the AI engine may be located in a control unit which is at least in communication with one or more decanters. In some applications, the AI engine maybe located at a remote entity (e.g., a server (cloud), etc.).

The AI engine may be adapted such that it may be used to control the operation of more than one decanter centrifuge.

By providing the aforementioned AI engine, an AI engine for optimizing the operation of a decanter may be provided which may be disentangled from a particular decanter centrifuge and maybe compatible to different decanter centrifuges. Therefore, a versatile AI-based control for the operation of a decanter centrifuge may be provided. Even further, if the AI engine is in communication with more than one decanter, the AI engine may be provided with training data from more than one decanter centrifuge which may thus lead to an increased amount of training data thus improving the precision of the AI-based predictions for the plurality of operation parameters of the centrifuge and may further improve the operation of a decanter centrifuge.

Another aspect of the present invention relates to an apparatus which may comprise means for carrying out the method as mentioned above.

In some cases, the apparatus may be an entity physically separated from the decanter. Alternatively, it may be possible that the apparatus is integrated in the decanter. The apparatus maybe a computer. In some cases, the apparatus may be part of a decanter (e.g., as a microcontroller, an integrated circuit (IC)), etc.

In some cases, the apparatus may be a remote entity. The remote entity may be adapted such that it may be in communication with the decanter by means of, e.g., a network connection.

The apparatus may be adapted such that it only controls and/or trains a single decanter. Alternatively, it may be possible that the apparatus controls and/or trains more than one decanter. In even further cases, the apparatus may be adapted such to control a grid of multiple decanters.

By providing an apparatus comprising means for carrying out the method as mentioned above, a control unit adapted to control and/or train the reinforcement-based AI engine may be facilitated.

Another aspect of the present invention relates to a computer program which may comprise instructions, which when executed by a processing system, may cause the processing system to perform a method as outlined above.

The processing system may be located in the decanter. Alternatively, the processing system may be located in an entity, physically separated from the decanter. In the latter case, the processing system may be a remote entity (e.g., a remote sever operating a cloud system) in communication with the decanter.

Another aspect of the present invention relates to a computer-implemented method for optimizing the output of a decanter centrifuge during operation using a supervised artificial intelligence, AI, engine, the method may comprise one or more of: a. operating the decanter centrifuge according to a plurality of operation parameters, b. processing, by the decanter, a physical input comprising a sludge and a polymer, and producing a physical output comprising a centrate and cake, c. determining a plurality of substance parameters based on the physical output and d. passing, to the supervised learning AI engine, the plurality of substance parameters and the plurality of operation parameters. The method may further comprise one or more of: e. determining, by the supervised learning AI engine, a quality value for each of the plurality of substance parameters, f. predicting, by the supervised learning AI engine, a plurality of adjusted operation parameters, and g. further operating the decanter based on the plurality of adjusted operation parameters.

The AI-based operation of a decanter based on a supervised learning AI engine may be seen as a second option (besides the implementation of a reinforcement-based AI engine) to improve the AI-based operation of a decanter.

The plurality of operation parameters and the plurality of adjusted operation parameters may comprise one or more of a differential speed of a scroll of the decanter, a speed of a decanter bowl, a feed flow of the sludge, and/or a feed flow of the polymer.

The determining of the plurality of substance parameters may further comprise determining, by one or more sensors: a dryness of the cake, a purity of the centrate, and a dosing of the polymer in the centrate.

The determining, by the supervised learning AI engine, of a quality value for each of the plurality of substance parameters may further comprises setting a low cake dryness quality value, if the cake dryness is in the range of 10-19,99%-dry substance, or setting a high cake dryness quality value, if the cake dryness is in the range of 20-35%DS, setting a low centrate purity quality value, if the purity of the centrate is in the range of 300-1000 nephlometric turbidity units, or setting a high centrate purity quality value, if the purity of the centrate is in the range of 50-299,99 NTU, and setting a high polymer dosing quality value, if the polymer dosing in the centrate is in the range of 2-9,99 kg/ tons of dry substance, tDS, or setting a low polymer dosing quality value, if the polymer dosing in the centrate is in the range of 10-20 kg/tDS.

The predicting, by the supervised learning AI engine, of a plurality of adjusted operation parameters may further comprise: determining, based on the plurality of operation parameters, a total energy consumption of the decanter and determining an optimized value for each of the differential speed of the scroll of the decanter, the speed of the decanter bowl, the feed flow of the sludge, and the feed flow of the polymer by considering a balance between the dryness of the cake, the purity of the centrate, the total energy consumption of the decanter and the dosing of the polymer in the centrate.

The determining of an optimized value may further comprise: if the cake dryness quality value is high, decreasing the optimized value for the feed flow of the polymer, decreasing at least one of the optimized values for the differential speed of the scroll of the decanter and the speed of the decanter bowl, and/or increasing the optimized value for the feed flow of the sludge; if the cake dryness quality value low, increasing the optimized value for the feed flow of the polymer, increasing at least one of the optimized values for the differential speed of the scroll of the decanter and the speed of the decanter bowl, and/or decreasing the optimized value for the feed flow of the sludge.

The determining of an optimized value may further comprise: if the centrate purity quality value is high, decreasing at least one of the optimized values for the differential speed of the scroll of the decanter and the speed of the decanter bowl, and/or increasing the optimized value for the feed flow of the sludge; if the centrate purity quality value is low, increasing at least one of the optimized values for the differential speed of the scroll of the decanter and the speed of the decanter bowl, and/or decreasing the optimized value for the feed flow of the sludge.

The determining of an optimized value may further comprise: if the polymer dosing quality value is high, increasing the optimized value for the feed flow of the polymer, and/or increasing at least one of the optimized values for the differential speed of the scroll of the decanter and the speed of the decanter bowl, and/or decreasing the optimized value for the feed flow of the sludge; if the polymer dosing quality value is low, decreasing the optimized value for the feed flow of the polymer, and/or decreasing at least one of the optimized values for the differential speed of the scroll of the decanter and the speed of the decanter bowl, and/or increasing the optimized value for the optimized value for the feed flow of the sludge.

The predicting, by the supervised learning AI engine, of a plurality of adjusted operation parameters may further comprise: deriving the plurality of adjusted operation parameters based on the optimized value for each of the differential speed of the scroll of the decanter, the speed of the decanter bowl, the feed flow of the sludge, and the feed flow of the polymer.

In some cases, the aforementioned steps b. to g. may be performed more than once.

Another aspect of the present invention relates to a computer-implemented method for training a supervised learning artificial intelligence, AI, engine usable for operating a decanter, the method may comprise the step of: a. simulating the operation of a decanter to generate a plurality of operation parameters, b. determining a plurality of substance parameters of the simulated decanter, c. passing the plurality of operation parameters and the plurality of substance parameters to the supervised learning AI engine and d. adjusting, the supervised learning AI engine based on the plurality of substance parameters and the plurality of operation parameters.

Another aspect of the present invention relates to a supervised learning artificial intelligence, AI, engine which may have been trained according to the aforementioned method and which may be usable in any of the aforementioned methods.

Another aspect of the invention relates to an apparatus which may comprise means for carrying out the method according to one of the aforementioned methods.

Another aspect of the present invention relates to a computer program which may comprise instructions, which when executed by a processing system, may cause the processing system to perform a method according to one of the aforementioned methods.

## 4. Short description of the drawings

Aspects of the present invention will be explained in more detail with reference to the accompanying figures below. These figures show:

Fig. 1:         Illustration of an exemplary decanter centrifuge;

Fig. 2:         Illustration of a decanter and exemplary inputs and outputs;

Figs. 3A-3C:    Illustration of a decanter and potential sensors used for a surveillance of inputs and outputs associated with the decanter;

Figs. 4A-4B:    Illustration of a training and predicting cycle of an AI engine for the operation of a decanter;

Figs. 5A-5B:    Illustration of a reinforcement training of an AI engine for the operation of a decanter;

Fig. 6:         Performance vs. time diagram of a decanter operated in different operation modes;

Figs. 7A-7B:    Performance vs. time diagram of a decanter when operated manually and when operated based on a trained AI engine (supervised learning);

Fig. 8:         Performance vs. time diagram of a decanter when operated manually and when operated based on a trained AI engine (reinforcement learning);

Fig. 9          Illustration of an exemplary supervised learning infrastructure;

Fig. 10:        Exemplary training data usable for training an AI engine.

## 5. Detailed description of preferred embodiments

Embodiments and variations of the present invention will be described in more detail below.

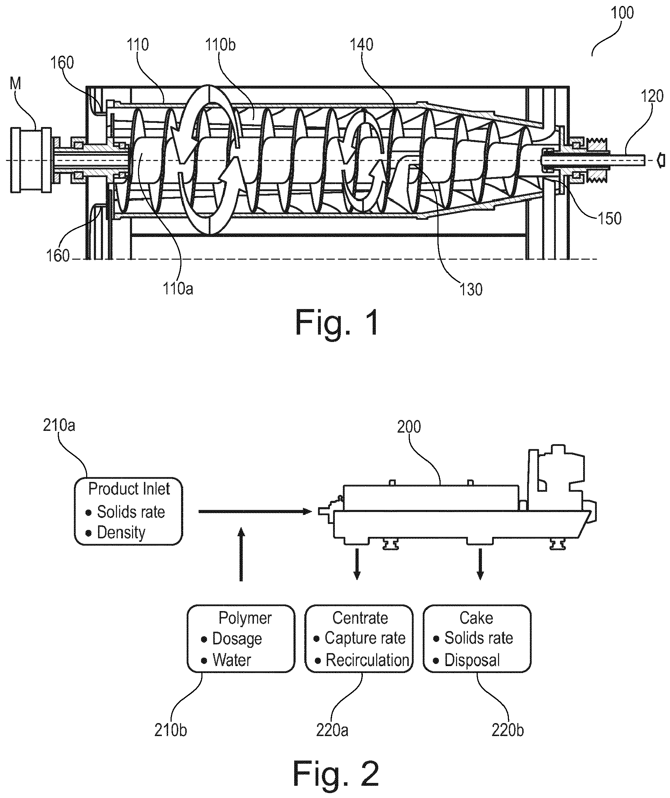

Fig. 1 shows an illustration of an exemplary decanter centrifuge 100 according to aspects of the present invention.

The exemplary decanter centrifuge 100 comprises a decanter bowl 110 which may comprise an inner volume 110a and an outer volume 110b (the latter surrounding the former). The inner volume 110a may be filled with a sludge through inlet port 120. As a result of a rotation of the decanter bowl 110 about its longitudinal axis, driven by motor M, sediments in the sludge may be separated from liquid in the sludge. The sediments may be transported along a radial direction of the decanter bowl 110 towards an inner wall of the inner volume 110a of the decanter bowl 110. The separated sediments may leave the inner volume 110a through outlet port 130 into the outer volume 110b. The inner volume 110a may further be surrounded by a scroll 140, helically wounded about an outer wall of the inner volume 140. Scroll 140 may be adapted to transport the sediments, which left the inner volume 110a through outlet port 130, towards outlet port 150 from which the sediments may be disposed from the decanter 100. The liquid in the inner volume 110a may leave the decanter bowl 110 by means of centrate outlet port 160.

More specifically, the decanter bowl 110 is provided with a predominantly cylindrical volume (e.g., possessing a longer extension along a longitudinal axis of the decanter as compared to its extension along a radial direction perpendicular to the longitudinal direction). The predominantly cylindrical volume may be tapered towards at least one of its ends (e.g., towards the right-hand side of the decanter 100 as depicted in Fig. 1). The decanter bowl 110 may comprise an inner volume 110a and an outer volume 110b. The inner volume 110a may be adapted to accommodate a sludge to be processed by the decanter 100. The outer volume 110b may be adapted to surround and accommodate the inner volume 110a.

The decanter bowl 110 may be adapted to be rotatable about its longitudinal axis at a bowl speed (e.g., a rotation speed in revolutions per minute (RPM)), driven by a motor M. Due to the rotation of the decanter bowl 110, centrifugal forces may be generated which may act on the liquid and the sediments in the inner volume 110a of the decanter bowl 110. Since the centrifugal forces Fz may scale as

$$F_Z = m \cdot \frac{v^2}{r},$$

<div align="right">(eq. 1)</div>

wherein m denotes the mass of a certain sediment in the sludge, v the tangential velocity of the sediment as a result of the rotation of the decanter bowl 110 and r the radial distance of the sediment from the longitudinal center axis within the decanter bowl 110, different sediments in the sludge may experience a stronger centrifugal force $F_z$ the stronger its mass m is. As a result of this stronger centrifugal force Fz, heavier sediments are pushed in a radial direction away from the longitudinal axis of the decanter 100 towards the inner wall of the inner volume 110a of the decanter bowl 110 whereas light-weight sediments remain in the vicinity of the longitudinal (center) axis of the decanter bowl 110.

The decanter bowl 110 is in liquid communication with an inlet port 120. Inlet port 120 may be adapted as a feedthrough for sludge into the inner volume 110a of the decanter bowl 110. In some exemplary embodiments, inlet port 120 may be provided with a valve such that a feed flow of the sludge maybe controlled (e.g., the feed flow of the sludge may be decreased upon an at least partially closing of the valve and vice versa).

A wall surrounding the inner volume 110a of the decanter bowl 110 may further be provided with a sediment outlet port 130 which provides a fluid communication between the inner volume 110a of the decanter bowl 110 and the outer volume 110b of the decanter bowl 110. Due to the separation of sediments from the liquid of the sludge, the separated sediments may accumulate at the inner wall of the inner volume 110a of the decanter bowl 110 as outlined above. These sediments may leave the inner volume 110a through the outlet port 130 into the outer volume 110b of the decanter bowl 110.

The inner volume 110a may be surrounded by a scroll 140. The scroll 140 may be arranged rotatable about the inner volume 110a within the outer volume 110b of the decanter bowl 110. The scroll 140 may be provided with a blade which is helically wound about the inner volume 110a along a longitudinal direction of the decanter bowl 110. The height of the blades may be equal to the radial distance between the outer wall of the inner volume 110a and the inner wall of the outer volume 110b. Scroll 140 may be adapted to rotate in the same direction as compared to the decanter bowl 110. In other words, if decanter bowl 110 is adapted to rotate clockwise, scroll 140 is adapted to also rotate clockwise or vice versa.

The scroll 140 may be adapted such that sediments which have left the inner volume 110a of the decanter bowl 110 are transported towards the direction of the inlet port 120 to outlet port 150 from which, the separated sediments may leave the decanter 100 and may be transported to a final waste disposal.

On the opposing other end of the decanter 100 (with respect to its longitudinal extension), which is located opposite to the inlet port 120, the inner volume 110a and the decanter 100 as such may be provided with a centrate outlet port 160. Since sediments in the originally injected sludge are separated from the liquid contained in the sludge, the final, processed sludge may predominantly comprise liquid. Said liquid may leave the inner volume 110a and the decanter 100 by means of the centrate outlet port 160 as essentially clean liquid.

Fig. 2 shows an illustration of a decanter 200 (which may be identical to decanter 100 as described with reference to Fig. 1, above) and exemplary inputs which may relate to a product inlet 210a and a polymer input 210b to be fed into the decanter 200 and exemplary outputs 220a and 220b to be obtained as output from the decanter 200.

More specifically, the product inlet 210a may be the sludge as described with reference to Fig. 1 A, above. The product inlet 210a may be parameterized by a solids rate (e.g., amount of solid particles in flowing liquid, expressed in %DS or kg/h) and a density (e.g., a mass of the product inlet expressed in mass per volume (e.g., $g/cm^3$, $kg/m^3$, $t/m^3$, etc.).

The polymer input 210b may be parametrized by a dosage of the polymer (e.g., in kg/tDS or l/h) and an associated amount of water along which the polymer may be input into the decanter. The latter facilitates a dilution of the polymer and may thus allow a precise adaption of the polymer concentration within the decanter according to situational needs (e.g., desired substance parameters).

As a result of providing the decanter 200 with product inlet 210a and polymer input 210b and a subsequent processing of the inputs within the decanter 200, a decanter output maybe obtained. The output of the decanter may comprise a centrate 220a and a cake 220b.

Centrate 220a may be understood as the remnant of the sludge (input into the decanter 200) after sediments contained in the sludge have been separated from liquid contained in the sludge. In other words, the centrate 220a may be referred to as cleaned liquid which may typically comprise a negligible amount of sediments as compared to the amount of sediments which was originally comprised in the sludge. The centrate quality may parametrized in NTU which may be associated with the quality/purity of the liquid after being processed in the decanter 200. Furthermore, the centrate 220a output from the decanter 200 may preferably be recirculated into the environment as a clean(ed)/purified liquid.

Cake 200b may be understood as the sediments which were originally contained in the sludge as solid particles, and which were separated from the liquid contained in the sludge. The cake 220b may be parameterized by a solids rate (e.g., in DS%). The cake 200b may be understood as waste arising from the purifying of the sludge by means of the decanter 200b and may be disposed (i.e., no further usage is intended within the scope of the invention).

The inputs and outputs as described beforehand may be provided irrespective of whether the decanter 200 is operated manually or based on an AI engine. If the decanter 200 is operated manually, an operator may be required to collect samples of the centrate and/or the cake, determine its' quality and dryness, respectively, and deduce potential operation settings for the decanter such that the outputs (and in particular their respective substance parameters) of the decanter 200 are optimized. However, if the decanter 200 is controlled by an AI engine, the decanter 200 may be controlled as described elsewhere herein. The AI engine may be provided with a plurality of parameters associated with the decanter 200 to predict potential one or more operation parameters for the decanter 200 such as one or more of a differential speed of the scroll 140 in the decanter 200, a speed of the decanter bowl 110, a torque of the scroll 140 of the decanter 200, information on vibrations of the liquid side of the decanter 200, information on the vibrations of the solid side of the decanter 200, current information of the main motor M of the decanter 200, current information on the secondary motor of the decanter 200, used to dive the scroll 140, and/or a bearing temperature (wherein the bearing may be arranged in between the motor M and the decanter bowl 110).

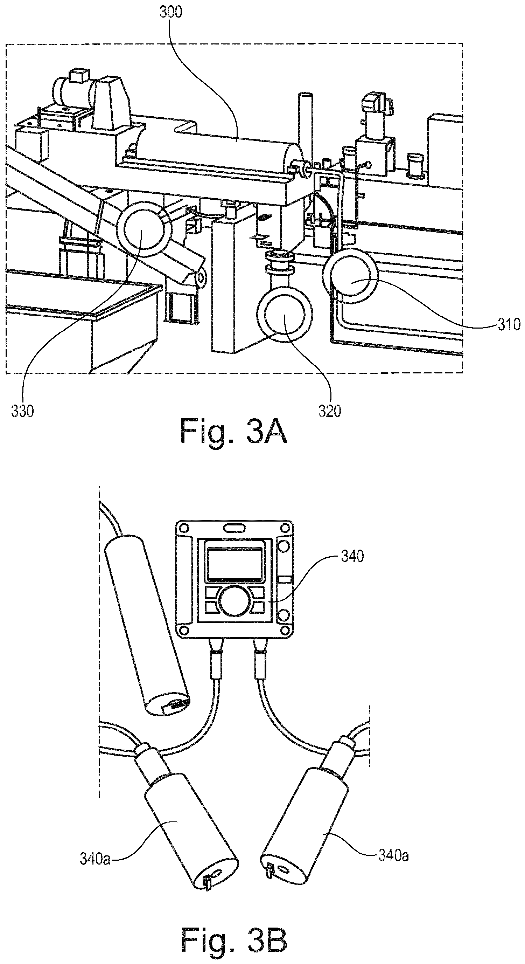

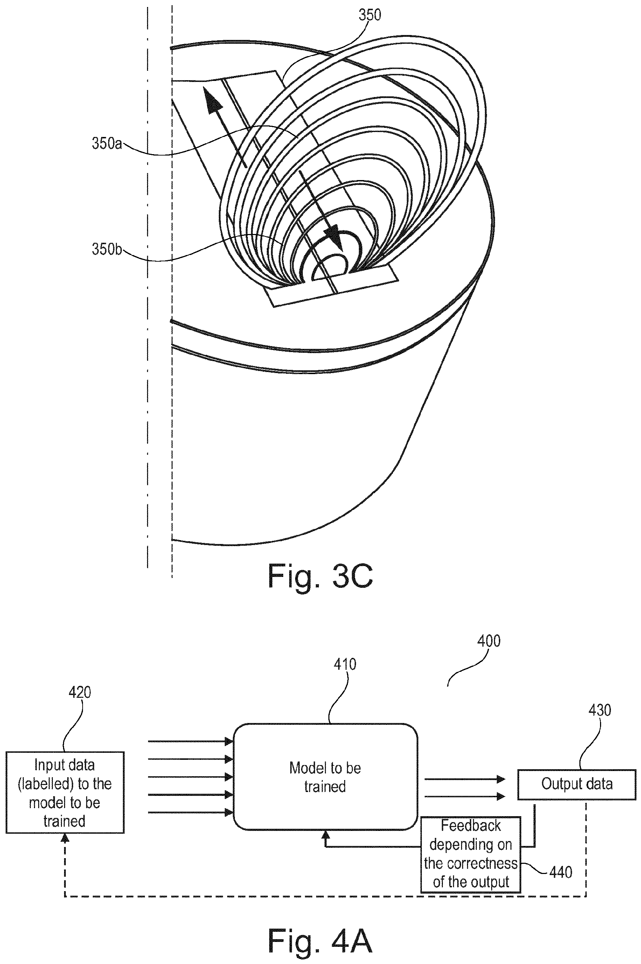

Figs. 3A-3C depict an exemplary arrangement of sensors located at or in the vicinity of a decanter (Fig. 3A) and exemplary sensors used to determine a plurality of substance parameters and/or a plurality of operation parameters (Figs. 3B and 3C).

The sensors may be configured to provide quantitative information on the plurality of substance parameters and/or the plurality of operation parameters as described elsewhere herein.

More specifically, Fig. 3A depicts an exemplary illustration of a decanter 300 (which may be identical to the decanter 100 or 200 as described with reference to Figs. 1 and 2, above) and exemplary locations for one or more sensors to provide the aforementioned quantitative information on, e.g., the plurality of substance and the inlet. Notably, an exemplary decanter 100 or 200 maybe provided with a feed control 310, a centrate monitoring 320 and/or a cake monitoring 330.

The decanter 300 may be provided with a feed control 310 located at or in close vicinity to the inlet port 120 as described with reference to Fig. 1, above. Feed control 310 may comprise a valve to control the flux of sludge entering the decanter bowl 110 (as described with reference to Fig. 1, above). Feed control 310 may further comprise one or more sensors to measure a sludge throughput (e.g., in l/h, $m^3$/h, kg/h, etc.).

The sensors adapted to monitor the feed may be infrared duo scatter light sensors, wherein a light source (e.g., a laser light source) is arranged on one side of a tube of the decanter 300 to be monitored and a respective light sensor is arranged at, e.g., an opposing side of the tube of the decanter 300. Light emitted from the light source may impinge on one or more sediments in the injected sludge and maybe scattered from the one or more sediments therein. The respective light sensor may be adapted to detect the light scattered from the sediments. It may then be facilitated to, e g., derive the amount of sediment particles in the injected sludge and their size distribution. This sensing method of injected sludge maybe referred to as a turbidity measurement in accordance with DIN EN ISO 7027 and DIN 38414.

Additionally or alternatively, decanter 300 may be provided with a centrate monitoring 320. Centrate monitoring 320 may comprise one or more sensors located near to the decanter 300 in a pipe carrying the liquid processed in the decanter 300 or in a chute which is connected to the decanter 300. The monitoring of the centrate quality may be based on infrared duo scatter light sensors as described with reference to the feed control 310, above.

Additionally or alternatively, it may also be possible that the centrate quality is measured based on fluoroscopy. This method also relies on a light source (e.g., a laser light source) arranged on one side of a tube and a respective light sensor arranged at a radially opposing side of the tube which may be adapted to monitor the light power of the light emitted from the light source which has penetrated the tube of the decanter 300 and has arrived at the respective light sensor such that a light barrier-like arrangement is facilitated. Any remnant particles crossing the light barrier may cause a temporary drop of the light power detected at the respective light sensor from which the centrate quality (i.e., the amount of remnant sediments) may then be derived from the power difference between the light power emitted by the light source and the detected light power at the respective light sensor.

Decanter 300 may further be provided with a cake monitoring 330. Cake monitoring 330 may, e.g., comprise sensors for determining a moisture content of the cake (e.g., a cake dryness). The measurement principle may be based on time domain reflectometry. Time domain reflectometry is based on the concept of inserting one or more electrodes into the cake and the transmission of an electric pulse along the one or more electrodes and may be reflected at the end of the one or more electrodes. Since the speed of the pulse propagation along the one or more electrodes may be moisture dependent (due to a moisture dependent change of the di-electricity of the cake), the moisture content in the cake surrounding the one or more electrodes may be determined.

Fig. 3B exemplarily shows a sensor 340 usable for sensing the amount of sediments in the sludge entering the decanter bowl 110 by means of the inlet port 120 and which may be based on the concept of infrared duo scattered light as described with reference to Fig. 3A, above. Sensor 340 may comprise light source 340a and a respective light sensor 340b.

Fig. 3C exemplarily shows a sensor 350 for measuring a moisture content in the cake. The sensor 350 may comprise a first electrode 350a along which an electric pulse may propagate (top-bottom direction in the exemplarily shown illustration). The electric pulse may be reflected at the end of the first electrode 350a. As a result of the reflection, the electric pulse may propagate a long a second electrode 350b. Since the speed of the propagation may depend on the moisture in the surrounding environment, the moisture content may be derived from the length of the period of time required for the electric pulse to travel along the first electrode 350a and the second electrode 350b. Some of the aforementioned sensors may only be located in the decanter 300 whereas, additionally or alternatively, some of the sensors may be located in a control cabinet.

Further sensors used in a decanter (not shown herein) may be magnetic inductive sensors (MID) configured to measure a polymer concentration in the decanter and/or variable frequency converters (VFC) adapted to measure a torque of the scroll and/or the motor.

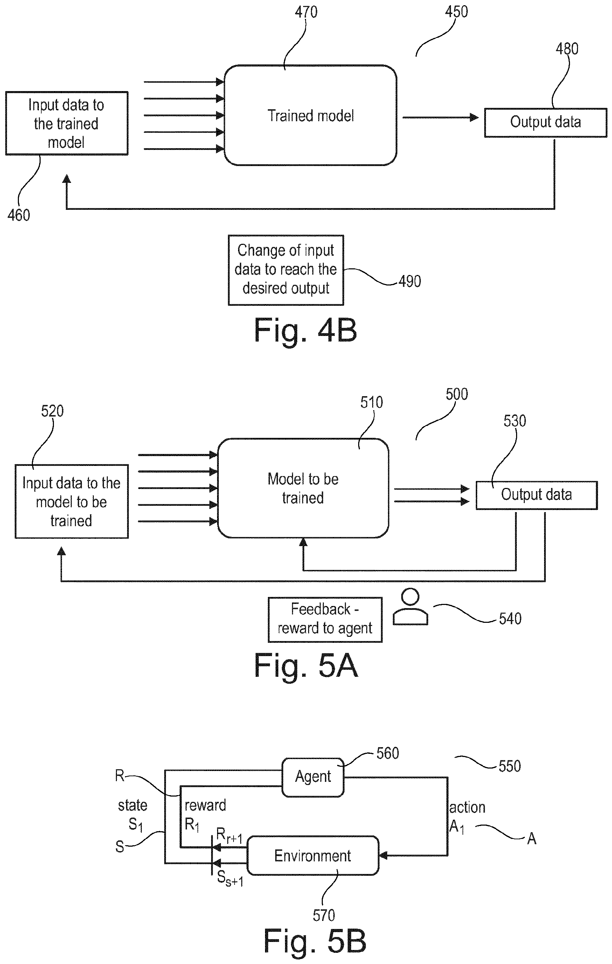

Fig. 4A exemplarily show the basic training concept of an AI engine according to aspects of the present invention, whereas Fig. 4B shows an AI engine-based operation concept of a decanter (Fig. 4B) according to aspects of the present invention.

Fig. 4A exemplarily illustrates an iterative training method 400 of an AI-engine (e.g., represented as a model to be trained). The training method 400 may be understood as a loop process starting with providing an AI engine 410 to be trained based on a supervised learning concept with input data 420. Input data 420 may comprise labelled training data sets. A labelled training data set may comprise one or more parameters to control a decanter (speed of the decanter bowl etc.), whereas a label may indicate the output data corresponding to an output product of the decanter (e.g. cake dryness etc.) provided by a decanter when operated according to the one or more parameters of the labelled training data set. After a training cycle, the output data 430 is compared against the label of the training data set in process step 440. The result of this comparison may be provided to the AI engine 410 to be trained. If the result of the comparison indicates that the output data corresponds to the label, then no adjustment of the AI engine 410 may be conducted. However, if the result of the comparison indicates that the output data 430 deviates from the label, then the model may be adjusted with the aim to produce output data 430 that corresponds to the label of a further training data set used for training in a subsequent training cycle. As indicated by the dashed arrow, the training data may be changed or extended by further training data sets, e.g., by an operator during training, to improve training.

The training data may be based on a pre-prepared data set (e.g., based on data obtained from simulating a decanter and/or based on data collected from one or more physically operated decanters), whereas the labels of the individual sets of the training data may be provided by a (human operator).

The training data may comprise labelled data.. Label data may be understood as a plurality of known substance parameters which may be obtained by a plurality of known operation parameters. The labeling may, e.g., be performed by an operator of a decanter.

In some cases, the input data 420 may be preprocessed (e.g., the input data 420 may scaled, e.g., by means of a robust scaler).

In an example, the training data may comprise data pairs of one or more operation parameters used to operate the decanter and one or more corresponding substance parameters arising from setting the decanter to the one or more operation parameters. The input data 420 may further comprise labels (e.g., assigned to one or more of the plurality of operation parameters and/or the plurality of substance parameters) indicating whether certain operation parameters are seen as positive (e.g., the respective operation parameter may lead to a change of one or more of the substance parameters towards a desired optimized value) or negative (e.g., the respective operation parameter may not lead to a change of one or more of the substance parameters towards a desired optimized value).

The training of the AI engine 410 may be based on adjusting an internal training model of the AI engine 410 such that a mathematical mapping of a plurality of operation parameters to a plurality of substance parameters is achieved, i.e., the trained AI engine 410 may be capable of predicting one or more of the operation parameters of the decanter which may realize one or more parameters of the plurality of substance parameters. This may, e.g., be achieved by minimizing an error function.

As a result of successful training, the AI engine 410 may be capable of deriving a plurality of operation parameters for a decanter upon providing the AI engine 410 with one or more parameters of the plurality of substance parameters such that the plurality of substance parameters is optimized. Successful training may be assumed when the value of the calculated error function is below a predefined threshold.

The aforementioned supervised learning concept at AI engine 410 may further comprise a maximization of the optionally assigned feedback values (e.g., if feedback values in an interval of 0 (worst) to 1 (best) are assigned similar to a quality value in reinforcement learning as will be described further below with reference to Figs. 5A and 5B). In some embodiments, the assigned feedback values may comprise an aggregation of the individual quality values assigned with respect to the cake dryness, the centrate quality and the polymer dosing. This aggregation may be understood as a quantitative measure for determining how closely a decanter is operated at its optimized settings. This may in particular allow a monitoring of running costs of the decanter, such as the total costs of ownership (TCO costs). In general, it may be beneficial to collect as many parameter values of the plurality of substance parameters and the plurality of operation parameters as possible to obtain a precise mapping of the current decanter operation. A precise mapping of the decanter may advantageously contribute to a cost-efficient operation of a decanter.

After providing the decanter with the one or more operation parameters (output data 430) a feedback 440 may be determined, indicating whether the predicted one or more operation parameters led to an improvement of the one or more substance parameters (i.e., whether a current value of the one or more substance parameters lies closer to the desired optimum value for the one or more substance parameters as in a previous iteration step). In some alternative cases, it may also be possible that the predicted output data 430 is not directly used to operate a decanter for the purpose of training but to assign the feedback 440 manually, e.g., by an operator of the decanter. In some cases, the feedback may be provided as an error function. An error function may be configured to calculate, for one or more parameters of the plurality of operation parameters, an error between one or more parameters of the plurality of substance parameters (assigned to the respective one or more parameters of the plurality of operation parameters) as comprised in the training data set and one or more parameters of a predicted plurality of substance parameters which may be obtained if the decanter is operated according to the predicted one or more parameters of predicted plurality of operation parameters. The training may be configured such that said error function, also commonly referred to as error or an error metric, is minimized. The error function may, e.g., be based on a mean square error (MSE), its rooted variant (RMSE), a mean absolute error (MAE), a percentage variant (MAPE), Hubert loss and/or other suitable metrics and/or combinations therefrom. The AI engine model may be based on a random forest regressor alone or a combination of the random forest regression with an adaptive boost regressor, kNeighbors regressor, Gaussian Naive Bayes, logistic regression. In case multiple regressions are used, a stacking regression may be required.

The predicted output 430 may be fed back to the AI engine 410 to be trained and the determined feedback 440 may be fed back to the AI engine 410 and optionally in combination with the predicted output 430 to further train the AI engine 410 in a subsequent iteration step of the training method 400.

In some embodiments, a data pair comprising a parameter of the plurality of substance parameters and a parameter of the plurality of operation parameters may be defined. Such a data pair may be referred to as a regressor and may be trained according to the aforementioned supervised learning method. If the first regressor is successfully trained, a second regressor may be trained identically. As soon as at least two regressors are trained, combination of the at least two regressors may be trained. As an example, the supervised learning at the AI engine 410 may obtain one or more parameters of a plurality of operation parameters (e.g., comprised in input data set 420) comprising a differential speed of the decanter, a speed of the decanter bowl, a torque of the scroll of the decanter, vibrations of a liquid side, vibrations of a solid side, a current of the main motor, a current of a secondary motor, a bearing temperature, a feed flow, a feed dry substance and/or a polymer flow. As label data (plurality of substance parameters), one or more of a cake dryness, a polymer dosing and/or a centrate quality may be provided to the AI engine 410.

During training, AI engine 410 may adapt its internal arithmetic such that a mapping of the plurality of operation parameters is facilitated. In other words, if a set of one or more of the plurality of operation parameters is provided to the AI engine 410, the AI engine 410 may be capable of reproducing the associated plurality of substance parameters. During training, AI engine 410 may predict a certain plurality of substance parameters (output data 430) and may feed it to feedback 440 which may calculate the current deviation of the prediction from the labeled data. The feedback 440 may be provided to the AI engine 410. AI engine 410 may, in a subsequent iteration step of the training method 400 predict a subsequent plurality of substance parameters (output data 430) which is again evaluated by feedback 440. This process may be iterated until the difference between the predicted plurality of substance parameters and the labeled data is below a predefined threshold.

Fig. 4B exemplarily illustrates an operation method 450 for a decanter based on a trained AI engine 470. The operation method may preferably be performed iteratively and may be identical to the training method 400 described with reference to Fig. 4A, above, however, the AI engine 470 may, in some cases not be trained any further and may only be used to predict output data 480 (even though a further training of the AI engine 470 is not excluded).

The operation method 450 may be based on an input data set 460 and preferably comprises a plurality of substance parameters which may have been obtained by analyzing (e.g., by means of the cake monitoring 330 and/or the centrate monitoring 320) of the output of the decanter. Furthermore, the input data set 460 may comprise a plurality of operation parameters (output data 480).

The input data set 460 is to be optimized by a trained AI engine 470. The trained AI engine 470 (e.g., the AI engine trained as described with reference to Fig. 4A, above, or any other suitable AI engine or any suitable AI engine) may be provided with the input data set 470 and may, based on its training, predict an output data set 480. In some cases, the input data set 460 maybe preprocessed prior to being provided to the trained AI engine 470.

The output data set 480 may comprise a plurality of operation parameters to be provided to a decanter. If the decanter is operated according to the plurality of operation parameters, the decanter may produce an output (e.g., the centrate 220a and/or the cake 220b and an associated plurality of substance parameters), which may be analyzed to determine, whether the output data set 480 predicted by the trained AI engine 470 has led to an optimization of the plurality of substance parameters.

The output produced by decanter if operated according to the predicted output data 480 may lead to a change of the input data 490. This new input data 490 may then be used as input data 460 and may be provided to the trained AI engine 470 to obtain new output data 480 in a subsequent iteration step.

Figs. 5A and 5B show an illustration of another exemplary embodiment of a training method 500 (Fig. 5A) for an AI engine 510 based on reinforcement learning according to an aspect of the present invention and a detailed illustration (Fig. 5B) of an exemplary agent interacting with an environment as part of the reinforcement learning concept illustrated in Fig. 5A.

The training method 500 as depicted in Fig. 5A may generally be implemented identically to the training method 400 (supervised learning) as described with reference to Fig. 4A, above with the exception that the actual training arithmetic for training the AI engine 510 is based on reinforcement learning which will be describer in further detail below.

Fig. 5A shows reinforcement training method 500. Training method 500 may comprise an input data set 520 which may comprise training data. The training data may comprise a plurality of operation parameters for a decanter and optionally a plurality of substance parameters associated with the plurality of operation parameters. Moreover, the training data may comprise one or more quality values which may be assigned to each of the plurality of operation parameters and which will further be described below.

The input data set 520 may be provided to the AI engine 510 to be trained. Based on the input data set 520, i.e., the plurality of operation parameters (and respective quality values), the AI engine 510 may adapt itself (e.g., based on a reinforcement learning algorithm) such (i.e., a new plurality of operation parameters for the decanter may be determined) that upon a presentation of one or more parameter values of a plurality of substance parameters, one or more parameter values of a plurality of operation parameters may be predicted by the AI engine 510 with the goal of ideally causing to an improvement of the one or more parameters comprised in the plurality of substance parameters. An improvement in that case may be understood as one or more parameter values of the plurality of substance parameters in a current iteration of the method 500 which lie closer to a desired optimized value of the one or more parameter values of the plurality of substance parameters as compared to one or more parameter values of the plurality of substance parameters of a preceding iteration step of the method 500. In other words, the plurality of operation parameters may be predicted such that the plurality of substance parameters may converge towards a desired optimized value when operating a decanter according to the predicted plurality of operation parameters. The training of the AI engine 510 may comprise the interaction with an agent as it will further be described with reference to Fig. 5B, below.

Based on an initial training step of AI engine 510 and the input data 520 provided to the AI engine 510, AI engine 510 may predict an output data set 530. Output data set 530 may comprise a plurality of operation parameters which may be provided to a decanter. Based thereon, the decanter may produce an output (as described above) from which a new, subsequent plurality of substance parameters may be derived. Output data set 530 may, e.g., comprise one or more of a differential speed of the scroll.

In a subsequent method step of the method 500, the plurality of operation parameters may be assigned with respective quality values 540 based on the obtained plurality of substance parameters (i.e., in a preferred embodiment, each parameter value of the plurality of operation parameters may be assigned with a respective quality value 540 depending on one or more of the parameter values of the plurality of substance parameters).

A quality value may indicate whether one or more parameter values of the plurality of operation parameters may be associated with an improvement of one or more parameter values of the plurality of substance parameters towards respective desired optimized substance parameters or whether the one or more parameter values of the plurality of operation parameters may be associated with a deterioration of one or more parameter values of the plurality of substance parameters (e.g., whether a predicted plurality of operation parameters has led to a plurality of substance parameters which is further apart from respective optimized substance parameters as compared to a preceding iteration step of method 500) or may score one or more parameter values of the plurality of substance parameters as neutral (e.g., the one or more parameter values of the plurality of substance parameters may neither be regarded as an improvement nor a deterioration as compared to a preceding iteration step of the method 500). In some cases, the quality values may be passed to an agent of the AI engine 510. The agent may further be described with reference to agent model 550 below and may be adapted such that the highest priority is to achieve comparably high cake dryness (e.g., a cake dryness of more than 20% DS). If an optimized cake dryness is achieved, the AI engine 510 may try to optimize the centrate quality (e.g., a value below 300 NTU) followed by a target of keeping the polymer dosage low (e.g., polymer dosage of less than 10 kg/tDS) and minimization of the energy consumption of the decanter. With a view to energy consumption (e.g., if the energy consumption may be prioritized), the energy consumption of a decanter may, e.g., be reduced by 25 to 35%, preferably by 30%, by reducing the cake dryness by 0.1 to 1.2%, preferably by 0.2 to 0.8%. Such a reduction of the cake dryness may, e.g., by achieved by decreasing the bowl speed of a decanter.

The assigned quality values 540, optionally the output data 530 and the plurality of substance parameters obtained by providing the output data 530 to a decanter, may be merged as input data 520 of a subsequent iteration step of the method 500. Based on this new, subsequent input data set 520, a subsequent training step of the AI engine 510 maybe performed.

With reinforcement learning the AI engine 510 will be more efficient with respect to the assigned quality values, because it learns to maximize the sum over all assigned quality values. Moreover, reinforcement learning provides higher flexibility (as compared to supervised learning) with respect to the training data used. As an example, supervised learning requires data pairs of operation parameters and substance parameters whereas reinforcement learning may only require operation parameters. Therefore, a continuous further training of the reinforcement AI engine 510 may be facilitated even though the decanter is at an operation stage.

Further in this regard, training data used for training the reinforcement-based AI engine 510 may not require any labeling.

In some cases, the AI engine 510 may comprise a neural network comprising one or more layers and each layer comprising one or more nodes. The neural network may be a feed forward neural network or a convolutional neural network or any combination therefrom. A training of the AI engine 510 may then comprise a determination of one or more weighting coefficients associated with the connection of nodes in two adjacent layers.

The training may further be based on a double deep Q network (DDQN) or a deep deterministic poly gradient (DDPG) architecture.

During the training, training data (e.g. comprising inflow, time step of a defined time) are provided to the AI engine 510. Furthermore, control parameters, e.g., speed of the decanter bowl, Diff Speed etc. of time step of t+1 may be part of the training data. The model then predicts remaining parameters for time step t+1 that are not part of the training data. A DDQN-based agent may provide as output all possible actions, e.g., an increase or decrease of the speed of the decanter bowl from which an action with highest value is selected. A DDPG-based agent outputs for each parameter a magnitude. Nitably, t denotes a time step.

Fig. 5B shows an illustration of an exemplary interaction method 550 of an agent 560 with an environment 570 to further illustrate the concept of reinforcement training method 500 and in particular the impact of the training method 500 on AI engine 510 (the letter being has been described with reference to Fig. 5A, above). Fig. 5B and the respective description uses the terminology typically used in the context of reinforcement learning in the art, however, no new entities are introduced as compared to the descriptions provided with reference to Fig. 5A, above.

Agent 560 may be comprised by the AI engine 510 as described with reference to Fig. 5A, above. Agent 560 may provide an action A to the environment 570 in which the agent 560 is located.

Action A may be identical to the output data 530 as described with reference to Fig. 5A, above.

Environment 570 may comprise one or more decanters which may be operated according to the action A. As a result, environment 570 may provide state information S (which may be identical to the plurality of operation parameters as described with reference to Fig. 5A, above) and quality value R (which maybe identical to the quality value as described with reference to Fig. 5A, above). The quality value R and the state information S may be understood as being comprised in the input data set 520 as it has been described with reference to Fig. 5A, above.

The state information S and the quality value R may be provided to the agent 560 based on which the agent 560 may predict a new action A in a subsequent iteration step of interaction method 550.

In the following, the interplay between the assignment of the quality value R and the prediction of an action A based at least in part on the assigned quality value R and the state information S by the agent 560 is described.

In the following, an exemplary assignment of a quality value R to a plurality of operation parameters is described based on one or more of the parameter values of the substance parameters. As outlined elsewhere herein, the plurality of substance parameters may comprise a polymer dosing, a cake dryness and a centrate quality.

In general, the assignment of a quality value R may be configured such that quality values R between 0 and 1 may be assigned (however, also any other suitable interval may be applicable). As an example, a quality value of 1 may be assigned if one or more parameter values of the plurality of predicted operation parameters have led to an improvement of one or more parameter values of the plurality of substance parameters. The quality value R may be assigned continuously within the interval between 0 and 1.

A quality value R may be assigned with respect to the centrate quality such that when the centrate quality is in the range of 150 to 250, a maximum quality value R may be assigned if the centrate quality is 200. In such a case, a maximum quality value of 1 may be assigned. This may be understood as an indication that the desired optimized centrate quality is 200. However, if the centrate quality is 225, then the assigned quality value R may be 0.5. This may be understood such that a higher centrate quality value (i.e., essentially a centrate with less purity) is not desirable over a centrate quality of 200. This may be due to the fact that a higher centrate quality value may also affect, e.g., the cake dryness and/or the polymer dosing and may thus only lead to a partial optimization of the plurality of substance parameters during the decanter operation (e.g., with respect to the centrate quality) while a deterioration of the substance parameters may occur. If the centrate quality is 150 or below or 250 or more than the assigned quality value may be 0, which may indicate that these substance parameters are to be avoided.

A similar assignment of a quality value R may be applicable for the dosing of the polymer. The polymer dosing may be in the range of 8 to 12 kg/tDS. In this example, a quality value of 1 may be assigned if the polymer dosing is 10 kg/tDS (desired optimum) whereas a lower quality value of, e.g., 0.5 may be assigned if the polymer dosing is 9 kg/tDS or less or 11 kg/tDS or more. An even lower quality value R of 0 may be assigned if the polymer dosing is 8 kg/tDS or less or if the polymer dosing is 12 kg/tDS or more.

A similar assignment may be performed with respect to the cake dryness. In an example, the maximum (theoretical) cake dryness may be 25% DS (however, this exemplary theoretical assumption is not to be understood as a limitation on the empirical achievable cake dryness which may exceed the theoretical dryness and may be up to 35%; in some exemplary cases, also the maximum (theoretical) cake dryness may be chosen to be up to 35%). In such a case, a quality value of 1 may be assigned. If the cake dryness is 20% DS or less or if the cake dryness is 30% DS or more, a quality value of 0.5 may be assigned. Further in this regard, if the cake dryness is 15% DS or less or if the cake dryness is 35% or more, a quality value of 0 may be assigned.

It is appreciated that the aforementioned assignment of quality values to the plurality of substance parameters is only to be understood as exemplary and that any other suitable assignment may also be possible. What is more, it may also be possible that the agent 560 is not adapted to maximize the sum over the assigned quality values R but that the agent 560 is adapted to minimize the sum over the assigned quality values R.

The agent may be adapted such that it tries to maximize the sum of the individual quality values R assigned to each of the parameters of the plurality of substance parameters. More specifically and as an example, based on the assignment of respective quality value R to each individual parameter comprised in the plurality of operation parameters (action A), the agent 560 may be informed which of the operation parameter values is considered as an improvement of the operation of the decanter (i.e., one or more of the parameters comprised in the plurality of substance parameters may be closer to a desired optimized parameter value) and which of the operation parameter values is considered as a deterioration of the operation of the decanter (e.g., one or more of the parameters comprised in the plurality of substance parameters may be further apart from a desired optimized parameter value). Based thereon, the agent 560 may set up a winning function which may comprise a calculation of a sum over the assigned quality values with the goal to optimize the total sum. Based on the goal of maximizing the sum over the assigned quality values, the agent 560 may predict one or more parameters of a plurality of operation parameters (action A) such, that based on the experience the agent 560 has gained over previous iterations of method 550, the determined one or more parameters of the plurality of operation parameters (when provided to a decanter) may lead to an improvement of the plurality of substance parameters.

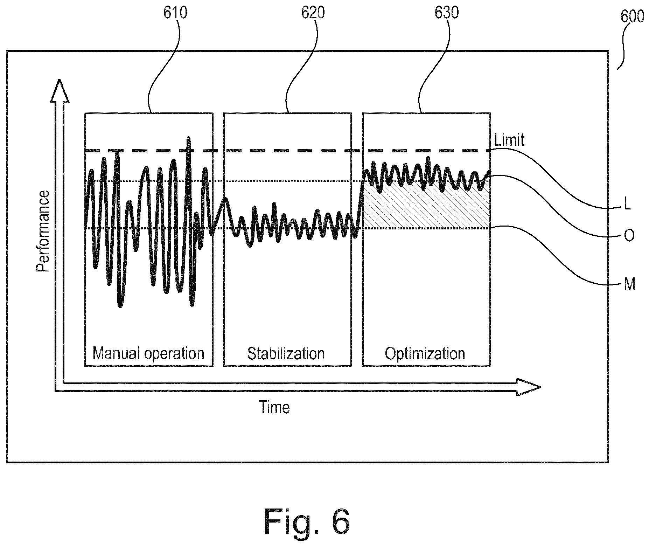

Fig. 6 depicts a diagram 600 which qualitatively shows an exemplary performance of a decanter (e.g., as described with reference to Figs. 1 and 2, above) vs. time.

A performance of the decanter may be understood as its capability of separating sediments contained in a sludge from liquid contained in the sludge. In this context, a high performance may be understood as a comparably high extent of separation (e.g., almost all sediments are separated from liquid in the sludge) as compared to a low performance with a respective comparably low extent of separation (e.g., almost no sediments are separated from liquid in the sludge).

More specifically, Fig. 6 shows the performance vs. time of an exemplary decanter when operated manually in manual operation section 610, after a stabilization of the decanter operation in a stabilization section 620 and after an optimization of the decanter in an optimization section 630.

More specifically, when a decanter is started, a plurality of operation parameters may be initially set by an operator of the decanter in the manual operation section 610, e.g., based on experience. After the initial start of the decanter, the operator may collect samples of the output (e.g., centrate 220a, cake 220b) of the decanter on, e.g., a regular basis, may analyze the output (e.g., to determine a respective plurality of substance parameters such as, e.g., a cake dryness, a centrate quality, a polymer dosing, etc.) and may derive new adjusted plurality of operation parameters for the decanter therefrom such that desired optimized values for the substance parameters may be obtained. Since this concept is essentially based on a "trial-and-error"-attempt to find the plurality of operation parameters which may lead to an optimization the plurality of substance parameters, the performance of the decanter achieved by means of the manual operation may fluctuate about a certain mean performance baseline M.

In a potential (subsequent) stabilization section 620, a plurality of operation parameters for the decanter may have been found and the decanter may have been set thereto which may lead to a decrease of the peak-to-peak fluctuation of the performance vs. time evolution in the diagram 600. However, the decreased peak-to-peak fluctuation may still fluctuate about the same mean performance baseline M (as described with reference to the manual operation section 610, above) which may lie below a desired optimized value O for the performance of the decanter. In other words, even though, the peak-to-peak fluctuation may have been decreased in the stabilization section 620, the desired optimized performance value O is not yet reached.

Optimization section 630 shows how the performance of the decanter may evolve vs. time if the plurality of operation parameters is set to their optimum values. In that case, the peak-to-peak fluctuation of the performance vs. time may be minimized and the mean value about which the fluctuation occurs may be shifted to the optimized performance value O only slightly below the expected performance limit L.

It is an aspect of the present invention that the optimized section 630 is reached shortly after initially starting the decanter such that the period of time during which the decanter is not operated at its optimized performance level is kept as short as possible.

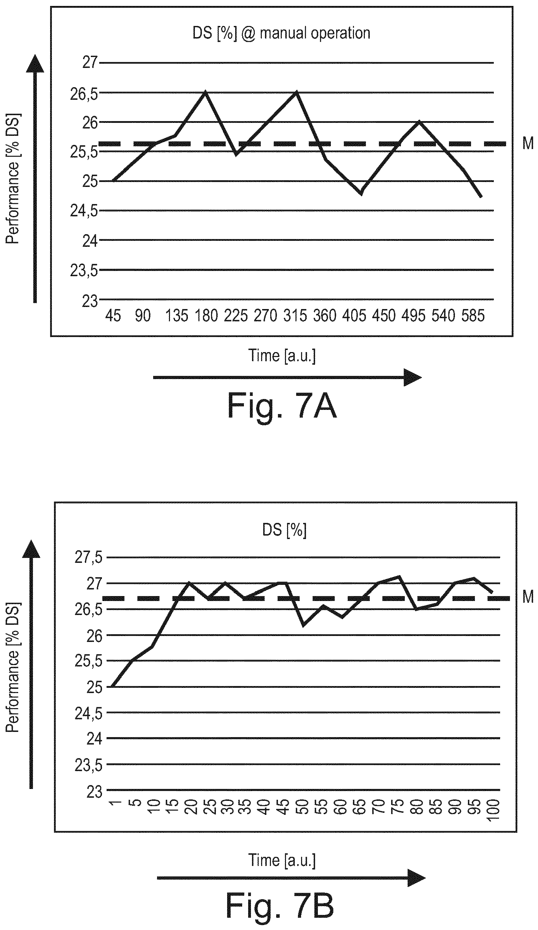

Figs. 7A and 7B show an exemplary performance of a decanter vs. time for a manual operation of the decanter (Fig. 7A) and the operation of a decanter based on a trained AI engine (trained based on supervised learning, Fig. 7B).

As depicted in Fig. 7A, the performance of the decanter, when operated manually, clearly fluctuates about a certain mean performance value M. The individual locations at which the slope of the performance curve suddenly changes may be associated with a manual readjustment of one or more of the plurality of operation parameters of the decanter. This may, e.g., be based on a sample collection (e.g., every 45 min) by an operator and a subsequent readjustment of one or more of the parameters comprised in the plurality of operation parameters. Due to the fluctuations of the performance vs. time, the decanter may not provide a constant and effective separation of sediments in the sludge from water in the sludge with respective disadvantageous effects on the centrate quality (fluctuating centrate quality and/or overall poor centrate quality) and/or the cake dryness (e.g., the cake may be too wet thus increasing the waste disposal costs of the cake), etc.

In comparison, Fig. 7B shows the performance of the decanter vs. time when the decanter is operated based on a trained AI engine, wherein the trained AI engine was trained based on supervised learning.

It can be seen that the peak-to-peak fluctuation of the performance curve has drastically been reduced over the performance curve shown in Fig. 7A. Furthermore, the average performance baseline about which the performance fluctuates has been increased over the performance curve shown in Fig. 7A. Therefore, when the decanter is operated based on the trained AI-engine, the decanter may not only provide a more constant performance over time but may also provide a generally higher performance. It is further noted that the initial rising slope depicted in each of the diagrams shown in Figs. 7A and 7B, respectively, may arise from an initial ramping of the decanter bowl 110 and/or the scroll 140 from a rest state (e.g., a state at which the decanter is shut off) to an operation state (e.g., a state at which a processing of sludge may occur, e.g., such as a separation of, e.g., centrate 220a and cake 220b). During said ramping process, the speed of the decanter bowl and/or a differential speed may be increased to a desired value, wherein the separation capability of the decanter may increase with increasing speed of the decanter bowl and/or the differential speed and may preferably peak at its desired (mean) efficiency.

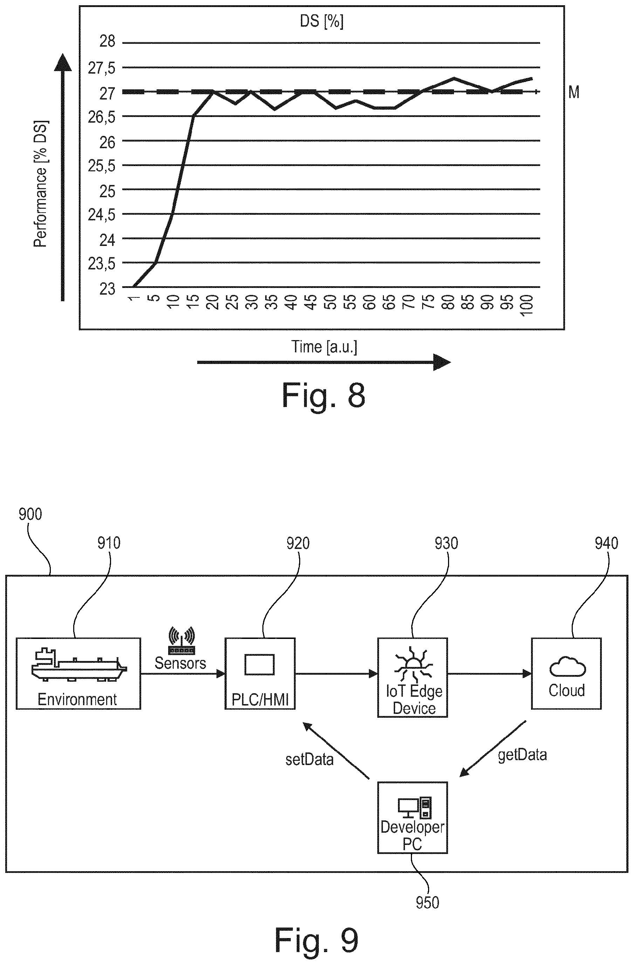

Fig. 8 shows an exemplary simulated performance of a decanter vs. time if the decanter is operated based on a trained reinforcement AI-engine.

As can be seen in Fig. 8, also if a reinforcement AI engine is used to operate the decanter, the peak-to-peak fluctuation of the decanter is reduced over a manual operation of the decanter as depicted in Fig. 7A. Moreover, the operation of the decanter based on a trained reinforcement AI-engine further shows a fluctuation about a mean performance baseline M which lies above the mean performance baseline M of Fig. 7A (decanter operated in manual mode).

Fig. 9 shows a schematic drawing of an exemplary system 900 (infrastructure) usable to operate a decanter. The system 900 may comprise an environment 910 which may be in communication with a human-machine-interface 920, an IoT Edge Device 930 and a Cloud Service 940. The cloud service 940 maybe in communication with a computer 950 whereas the computer may be in communication with the human-machine-interface 920.

Environment 910 may be identical to environment 570 (as described with reference to Fig. 5B, above) and may comprise one or more decanters. Environment 910 may be in (wireless and/or wired) communication with a human machine interface (HMI) 920.

The HMI 920 may be physically separated from the environment 910 or may be part of the environment 910 (e.g., part of the decanter as a display). The HMI 920 may provide means for displaying decanter-specific settings to an operator and to receive commands from the operator.

The HMI 920 may be in communication with an IoT Edge Device 930. The IoT Edge Device 930 may be configured to provide access to a network and/or the internet. Based thereon, the IoT Edge Device 930 may be in communication with a Cloud Service 940.

The Cloud Service 940 may be accessible over a (local) network and/or over the internet. Cloud Service 940 may at least partially implement a trained AI engine (based on supervised and/or reinforcement learning) such that a plurality of substance parameters may be provided to the AI engine which may then predict a plurality of operation parameters for the one or more decanters located in the environment 910. In some cases, Cloud Service 940 may be implemented as a database storing a plurality of substance parameters and a plurality of operation parameters (and optionally feedback and/or quality values) such that a potential training data set is generated as the one or more decanters in environment 910 are operated. Said training data set may, e.g., be used for the training of an AI engine usable for the operation of one or more other decanters.

The Cloud Service 940 may further be in communication with computer 950. Computer 950 may be usable to surveil and control the predicting of the plurality of operation parameters of the one or more decanters. Furthermore, computer 950 may be in communication with the HMI 920.

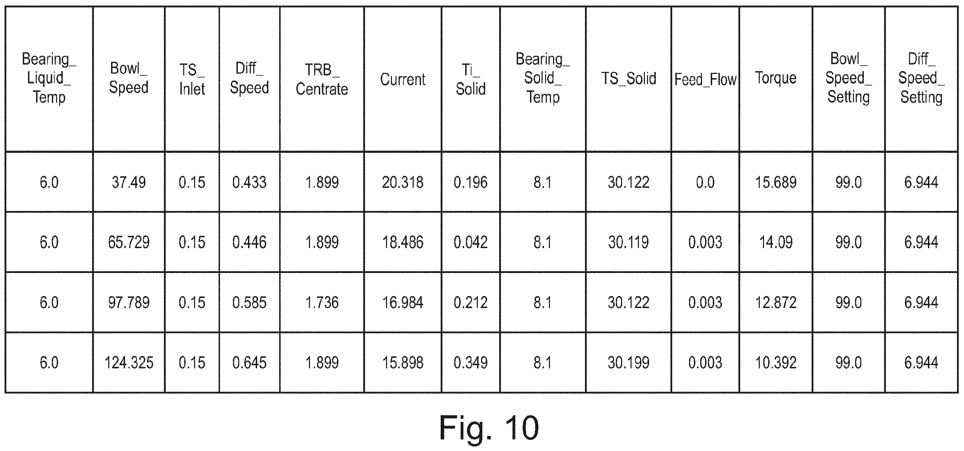

Fig.10 shows an exemplary training data set which may be used to train an AI engine as described elsewhere herein. The training data set may in particular be applicable for reinforcement learning. Each of the columns shown in the training data set of Fig. 10 may relate to a certain operation parameter of the plurality of operation parameters which may be of particular relevance for the operation of a decanter and suitable for training. Each of the rows shown in the training data set of Fig. 10 may relate to a distinct set of operation parameters determined at the same time, whereas operation parameters in different rows may have been determined at different times.

The exemplary training data set may comprise one or more of a bearing liquid temperature (bearing_liquid_temp), a bowl speed of a decanter (Bowl_Speed), a XX of the inlet (TS_Inlet), a differential speed of the decanter (Diff_Speed), a TRB of the centrate (TRB_centrate), a current of the motor (current), an inlet temperature of the solid (Ti_Solid), a bearing solid temperature (Bearing_Solid_Temp), a temperature of the solid (TS_Solid, typically in the range of 15-45°C, preferably between 20-40°C, depending on the process and weather conditions), a feed flow rate (feed_flow), a torque of the scroll (Torque, measured in % and may typically lie in between 40-90%, preferably in between 45-85%, depending on the process conditions at each waste water treatment plant), a bowl speed setting (Bowl_Speed_Setting) and a differential speed setting (Diff_Speed_Setting).

As explained with reference to Fig. 5B, above, each of the operation parameters comprised in the training data set may be provided with a quality value to essentially score whether a particular operation parameter of the set of operation parameters may positively affect, i.e., improve one or more parameters of the plurality of substance parameters or whether a deterioration of one or more parameters of the plurality of substance parameters occurs.

In the following, an exemplary training of a reinforcement AI engine which comprises an agent (such as the agent 560 as described with reference to Fig. 5B, above) is described.

As an example, if it is determined, by an agent, that an increase of a bowl_speed of 37.49 a.u. (first row of column "Bowl_Speed" of the training data set of Fig. 10) to 65.729 a.u. may positively affect the cake dryness a quality value of, e.g., 1 may be assigned to the "Bowl_Speed" parameter of 65.729 a.u. This may indicate to the agent that an increase of the "Bowl_Speed" may be advantageous in order to further increase the output value of the winning function of the agent. Therefore, the agent may predict an even higher "Bowl_Speed" (e.g., 97.789 a.u.) to potentially even further increase the value of its winning function. In a subsequent iteration step of it may have been determined that the cake dryness has further increased. Therefore, a quality value may be assigned to the "Bowl_Speed" of 97.789 a.u. (e.g., a quality value of 1 may be assigned) indicating that the further increase of the "Bowl_Speed" is seen as advantageous in view of an optimization of, e.g., the cake dryness. Based thereon, the agent may further try to increase the value of the winning function by once again predicting an even higher "Bowl_Speed" of 124.325 a.u. In case it is determined that a further increase of the "Bowl_Speed" leads to a deterioration of one or more parameters of the plurality of substance parameters, a decrease of the "Bowl_Speed" may be initiated such that not only a single parameter of the plurality of substance parameters is optimized but that the plurality of substance parameters is optimized in its entirety. The training may be performed similarly with respect to the further training parameters comprised in the training data set shown in Fig. 10.

Based on the aforementioned exemplary training method, the agent may gain the knowledge which ones of the one or more parameters of the plurality of operation parameters are to be adjusted and how such that an optimization of the plurality of substance parameters may be achieved.

The method according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium. Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**Claims**

1. A computer-implemented method for optimizing the output of a decanter during operation using a reinforcement artificial intelligence, AI, engine, the method comprising:

   a. operating the decanter according to a plurality of operation parameters;
   b. processing, by the decanter, a physical input comprising a sludge and a polymer, and producing a physical output comprising a centrate and cake;
   c. determining a plurality of substance parameters based on the physical output;
   d. passing, to the reinforcement AI engine, the plurality of substance parameters and the plurality of operation parameters;
   e. determining, by the reinforcement AI engine, a quality value for each of the plurality of substance parameters;
   f. predicting, by the reinforcement AI engine, a plurality of adjusted operation parameters; and
   g. further operating the decanter based on the plurality of adjusted operation parameters.

2. The computer-implemented method according to the preceding claim, wherein the plurality of operation parameters and the plurality of adjusted operation parameters comprise:

   - a differential speed of a scroll of the decanter;

   - a speed of a decanter bowl;
   - a feed flow of the sludge; and/or
   - a feed flow of the polymer.

3. The computer-implemented method according to claim 2, wherein determining the plurality of substance parameters further comprises:
   determining, by one or more sensors:

   a dryness of the cake,
   a purity of the centrate, and
   a dosing of the polymer in the centrate.

4. The computer-implemented method according to claim 3, wherein the determining, by the reinforcement AI engine, a quality value for each of the plurality of substance parameters further comprises:

   setting a low cake dryness quality value, if the cake dryness is in the range of 10-19,99%-dry substance, %DS, or setting a high cake dryness quality value, if the cake dryness is in the range of 20-35%DS;
   setting a low centrate purity quality value, if the purity of the centrate is in the range of 300-1000 nephlometric turbidity units, NTU, or setting a high centrate purity quality value, if the purity of the centrate is in the range of 50-299,99 NTU; and
   setting a high polymer dosing quality value, if the polymer dosing in the centrate is in the range of 2-9,99 kg/tons of dry substance, tDS, or setting a low polymer dosing quality value, if the polymer dosing in the centrate is in the range of 10-20 kg/tDS.

5. The computer-implemented method according to any one of the claims 2-4, wherein the predicting, by the reinforcement AI engine, a plurality of adjusted operation parameters further comprises:

   determining, based on the plurality of operation parameters, a total energy consumption of the decanter;
   determining an optimized value for each of the differential speed of the scroll of the decanter, the speed of the decanter bowl, the feed flow of the sludge, and the feed flow of the polymer by considering a balance between the dryness of the cake, the purity of the centrate, the total energy consumption of the decanter and the dosing of the polymer in the centrate.

6. The computer-implemented method according to claim 5, wherein the determining an optimized value further comprises:

if the cake dryness quality value is high, decreasing the optimized value for the feed flow of the polymer, decreasing at least one of the optimized values for the differential speed of the scroll of the decanter and the speed of the decanter bowl, and/or increasing the optimized value for the feed flow of the sludge;
if the cake dryness quality value is low, increasing the optimized value for the feed flow of the polymer, increasing at least one of the optimized values for the differential speed of the scroll of the decanter and the speed of the decanter bowl, and/or decreasing the optimized value for the feed flow of the sludge.

7. The computer-implemented method according to claims 5-6, wherein the determining an optimized value further comprises:

if the centrate purity quality value is high, decreasing at least one of the optimized values for the differential speed of the scroll of the decanter and the speed of the decanter bowl, and/or increasing the optimized value for the feed flow of the sludge;
if the centrate purity quality value is low, increasing at least one of the optimized values for the differential speed of the scroll of the decanter and the speed of the decanter bowl, and/or decreasing the optimized value for the feed flow of the sludge.

8. The computer-implemented method according to claims 5-7, wherein the determining an optimized value further comprises:

if the polymer dosing quality value is high, increasing the optimized value for the feed flow of the polymer, and/or increasing at least one of the optimized values for the differential speed of the scroll of the decanter and the speed of the decanter bowl, and/or decreasing the optimized value for the feed flow of the sludge;
if the polymer dosing quality value is low, decreasing the optimized value for the feed flow of the polymer, and/or decreasing at least one of the optimized values for the differential speed of the scroll of the decanter and the speed of the decanter bowl, and/or increasing the optimized value for the optimized value for the feed flow of the sludge.

9. The computer-implemented method according to any one of the claims 5-8, wherein the predicting, by the reinforcement AI engine, a plurality of adjusted operation parameters further comprises:
deriving the plurality of adjusted operation parameters based on the optimized value for each of the differential speed of the scroll of the decanter, the speed of the decanter bowl, the feed flow of the sludge, and the feed flow of the polymer.

10. The computer-implemented method according to any one of the preceding claims, further comprising:
adjusting, by an agent, the reinforcement AI engine based on the plurality of substance parameters and the plurality of operation parameters.

11. The computer-implemented method according to any one of the preceding claims, further comprising:
performing the steps b. to g. more than once.

12. A computer-implemented method for training a reinforcement artificial intelligence, AI, engine usable for operating a decanter centrifuge, the method comprising the step of:

a. simulating the operation of a decanter centrifuge to generate a plurality of operation parameters;
b. determining a plurality of substance parameters of the simulated decanter centrifuge;
c. passing the plurality of operation parameters and the plurality of substance parameters to the reinforcement AI engine;
d. adjusting, by an agent, the reinforcement AI engine based on the plurality of substance parameters and the plurality of operation parameters.

13. A reinforcement artificial intelligence, AI, engine trained according to the method of claim 12 and usable in a method according to claims 1-11.

14. An apparatus comprising means for carrying out the method according to one of the claims 1-11 or 12-13.

15. A computer program comprising instructions, which when executed by a processing system, causing the processing system to perform a method according to one of the claims 1-11 or 12-13.

Fig. 1

Fig. 2

300

310

330          320

# Fig. 3A

340

340a          340a

# Fig. 3B

Fig. 3C

Fig. 4A

470

450

Input data to
the trained
model

Trained model

480

Output data

460

490

Change of input
data to reach the
desired output

Fig. 4B

520

510

500

530

Input data to the
model to be
trained

Model to be
trained

Output data

Feedback -
reward to agent

540

Fig. 5A

560

550

Agent

R

state
$S_1$

reward
$R_1$

action
$A_1$

A

S

$R_{r+1}$

$S_{s+1}$

Environment

570

Fig. 5B

Fig. 6

Fig. 7A

Fig. 7B

Fig. 8

Fig. 9

| Bearing_Liquid_Temp | Bowl_Speed | TS_Inlet | Diff_Speed | TRB_Centrate | Current | Ti_Solid | Bearing_Solid_Temp | TS_Solid | Feed_Flow | Torque | Bowl_Speed_Setting | Diff_Speed_Setting |
|---|---|---|---|---|---|---|---|---|---|---|---|---|
| 6.0 | 37.49 | 0.15 | 0.433 | 1.899 | 20.318 | 0.196 | 8.1 | 30.122 | 0.0 | 15.689 | 99.0 | 6.944 |
| 6.0 | 65.729 | 0.15 | 0.446 | 1.899 | 18.486 | 0.042 | 8.1 | 30.119 | 0.003 | 14.09 | 99.0 | 6.944 |
| 6.0 | 97.789 | 0.15 | 0.585 | 1.736 | 16.984 | 0.212 | 8.1 | 30.122 | 0.003 | 12.872 | 99.0 | 6.944 |
| 6.0 | 124.325 | 0.15 | 0.645 | 1.899 | 15.898 | 0.349 | 8.1 | 30.199 | 0.003 | 10.392 | 99.0 | 6.944 |

Fig. 10

Europäisches
Patentamt

European
Patent Office

Office européen
des brevets

# EUROPEAN SEARCH REPORT

**Application Number**

**EP 22 19 1526**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/018974 A1 (TOMOE KOGYO KK [JP]) 27 January 2022 (2022-01-27) * figure 5 * ----- | 1-15 | INV. B04B1/20 B04B13/00 |
| A | JP 2021 102195 A (TOMOE KOGYO KK; CROSS COMPASS LTD) 15 July 2021 (2021-07-15) * figure 4 * ----- | 1-15 | |
| A | JP H04 371244 A (NISHIHARA ENV SAN RES CO LTD) 24 December 1992 (1992-12-24) * figure 1 * ----- | 1-15 | |

| TECHNICAL FIELDS SEARCHED (IPC) |
|---|
| B04B |

The present search report has been drawn up for all claims

| Place of search | Date of completion of the search | Examiner |
|---|---|---|
| Munich | 20 February 2023 | Kopacz, Ireneusz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1526

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2023

| Patent document cited in search report | | Publication date | Patent family member(s) | | Publication date |
|---|---|---|---|---|---|
| WO 2022018974 | A1 | 27-01-2022 | JP 2022021243 A<br>WO 2022018974 A1 | | 02-02-2022<br>27-01-2022 |
| JP 2021102195 | A | 15-07-2021 | NONE | | |
| JP H04371244 | A | 24-12-1992 | NONE | | |

**REFERENCES CITED IN THE DESCRIPTION**

**Patent documents cited in the description**

- WO 2019150002 A1
- JP 2021102195 A
- JP 6994330 B